# EUROPÄISCHE PATENTANMELDUNG

(11) **EP 3 576 243 A1**
(43) Veröffentlichungstag der Anmeldung: **04.12.2019**
(21) Anmeldenummer: 19157912.7
(22) Anmeldetag: 19.02.2019
(51) Int. Cl.: H02J 3/06, H02J 13/00

(54) **TECHNISCHE ENTKOPPELUNG EINES MICRO-GRIDS**

(30) Priorität: 01.06.2018 DE 102018113129
(71) Anmelder: Innogy SE, 45128 Essen (DE)
(72) Erfinder: GAUL, Armin, 59379 Selm (DE); HERMES, Roland, 45141 Essen (DE)
(74) Vertreter: Cohausz & Florack

(57) **Zusammenfassung**

Offenbart wird u.a. eine Vorrichtung, die Folgendes umfasst: zumindest eine Entkopplungseinheit über die ein Micro-Grid (120) umfassend zumindest eine Energiequelle (150) und zumindest einen Verbraucher (160) mit einem öffentlichen Stromnetz (130) verbunden ist; und zumindest einen Sensor zur Ermittlung von einem oder mehreren Strom- und/oder Spannungsparametern, insbesondere Spannung und/oder Frequenz, des Micro-Grids und/oder des öffentlichen Stromnetzes; wobei erzeugte Energie des Micro-Grids in das öffentliche Stromnetz einspeisbar und/oder erzeugte Energie des öffentlichen Stromnetzes in das Micro-Grid einspeisbar ist, so dass die erzeugte elektrische Energie des öffentlichen Stromnetzes von dem zumindest einen Verbraucher des Micro-Grids nutzbar ist, wobei über den einen oder die mehreren Strom- und/oder Spannungsparameter, die seitens des zumindest einen Sensors ermittelbar sind, das Micro-Grid zumindest für eine vordefinierte Zeitspanne in einer von dem öffentlichen Stromnetz abweichenden Frequenz betreibbar ist. Offenbart wird ferner ein System mit einer oder mehreren erfindungsgemäßen Vorrichtungen.

## Beschreibung

### Gebiet

Beispielhafte Ausführungsformen der Erfindung betreffen Micro-Grids und deren Ankopplung an ein öffentliches Stromnetz, insbesondere die Beeinflussung der Stabilität eines öffentlichen Stromnetzes durch ein Micro-Grid.

### Hintergrund

Bei zwischen dem öffentlichen Stromnetz - im Folgenden auch als Verteilnetz bezeichnet - und einem Micro-Grid gemeinsam genutzten Infrastrukturen bzw. Elementen (z. B. Leitungen) kann es zu Lastsituationen für das öffentliche Stromnetz kommen, in denen mindestens einer der beiden das gemeinsame Element nutzenden Partner (Netzbetreiber des öffentlichen Stromnetzes oder Betreiber des Micro-Grids) reagieren muss, um insbesondere eine Überlastung oder sogar Schädigung des öffentlichen Stromnetzes zu vermeiden.

Es ist dabei bekannt, dass die Spannung und Frequenz des Micro-Grids in heute typischen Realisierungen von dem öffentlichen Stromnetz beeinflusst sind und umgekehrt.

In technischen Anschlussbedingungen der öffentlichen Stromversorgung sind hohe Anforderungen an die Netzverträglichkeit einzelner Verbraucher gestellt. Bei einer Abtrennung eines Netzbereiches in Form eines Micro-Grid, z. B. im Rahmen einer sogenannten LEC (Local Energy Community) ist dabei jedoch zu hinterfragen, ob in diesem Nahbereich mit einer spezifischen Konstellation aus leistungselektronische Komponenten (z. B. eine oder mehrere Energiequellen bzw. Erzeugungsanlagen, Verbraucher bzw. Lasten und/oder Speicher) die gleichen Anforderungen, wie im öffentlichen Stromnetz gelten müssen, da dies insbesondere hohe Kosten für diese leistungselektronischen Komponenten, die diese Anforderungen erfüllen müssen, mit sich bringen kann.

Insbesondere die Anforderung an leistungselektronische Komponenten in Bezug auf Oberwellen und/oder Flicker, die z. B. durch Spannungsschwankungen verursacht sind und zu Leuchtlichtschwankungen führen können, können entsprechend hoch sein.

### Zusammenfassung einiger beispielhafter Ausführungsformen der Erfindung

Aufgrund der steigenden Anzahl von mit öffentlichen Stromnetzen verbundenen Micro-Grids wäre es wünschenswert, insbesondere eine technische Entkopplung eines Micro-Grids zur Vereinfachung der technischen Anforderungen an leistungselektronische Komponenten (z. B. Erzeugungsanlagen, Lasten und/oder Speicher) ermöglichen zu können.

Gemäß einem ersten beispielhaften Aspekt der Erfindung wird eine Vorrichtung offenbart, die Vorrichtung umfassend:
- zumindest eine Entkopplungseinheit über die ein Micro-Grid umfassend zumindest eine Energiequelle und zumindest einen Verbraucher mit einem öffentlichen Stromnetz verbunden ist; und
- zumindest einen Sensor zur Ermittlung von einem oder mehreren Strom- und/oder Spannungsparametern, insbesondere Spannung und/oder Frequenz, des Micro-Grids und/oder des öffentlichen Stromnetzes;
   wobei erzeugte Energie des Micro-Grids in das öffentliche Stromnetz einspeisbar und/oder erzeugte Energie des öffentlichen Stromnetzes in das Micro-Grid einspeisbar ist, so dass die erzeugte elektrische Energie des öffentlichen Stromnetzes von dem zumindest einen Verbraucher des Micro-Grids nutzbar ist,
   wobei über den einen oder die mehreren Strom- und/oder Spannungsparameter, die seitens des zumindest einen Sensors ermittelbar sind, das Micro-Grid zumindest für eine vordefinierte Zeitspanne in einer von dem öffentlichen Stromnetz abweichenden Frequenz betreibbar ist.

Gemäß einem zweiten beispielhaften Aspekt der Erfindung wird eine Vorrichtung offenbart, die zumindest einen Prozessor und zumindest einen Speicher, der Programmcode beinhaltet, umfasst, wobei der Speicher und der Programmcode eingerichtet sind, mit dem zumindest einen Prozessor eine Vorrichtung (beispielsweise die Vorrichtung mit dem Prozessor und dem Speicher) dazu zu veranlassen, zumindest das eine oder die mehreren Mittel gemäß der Vorrichtung nach dem ersten Aspekt der Erfindung auszuführen und/oder zu steuern. Dabei können entweder alle Mittel der Vorrichtung gesteuert werden, oder alle Mittel der Vorrichtung ausgeführt werden, oder ein oder mehrere Mittel gesteuert und ein oder mehrere Mittel ausgeführt werden.

Die Vorrichtung gemäß dem ersten und/oder dem zweiten Aspekt der vorliegenden Erfindung ist insbesondere ein Bestandteil (z. B. Einrichtung) des Micro-Grids. Zusätzlich kann die Vorrichtung gemäß dem ersten und/oder dem zweiten Aspekt der vorliegenden Erfindung ein Bestandteil sowohl des Micro-Grids als auch des öffentlichen Stromnetzes sein. Beispielsweise ist die Vorrichtung gemäß dem ersten und/oder dem zweiten Aspekt der vorliegenden Erfindung von einem Ankoppelungspunkt bzw. Übergabepunkt, über den das Micro-Grid mit dem öffentlichen Stromnetz operativ (z. B. elektrisch) verbunden ist, umfasst oder an diesem operativ (z. B. elektrisch) angebunden und/oder bildet einen derartigen Ankopplungspunkt aus. Beispielsweise derart, dass der eine oder die mehreren Strom- und/oder Spannungsparameter von der Vorrichtung gemäß dem ersten und/oder dem zweiten Aspekt der vorliegenden Erfindung an dem Ankoppelungspunkt bzw. Übergabepunkt erfasst bzw. ermittelt werden können mittels des zumindest einen Sensors. Alternativ oder zusätzlich ist die Vorrichtung gemäß dem ersten und/oder zweiten Aspekt der vorliegenden Erfindung kommunikationstechnisch mit dem Micro-Grid verbunden oder kommunikationstechnisch von dem Micro-Grid umfasst.

Gemäß einem dritten beispielhaften Aspekt der Erfindung wird ein System offenbart, das eine oder mehrere Vorrichtungen umfasst, die eingerichtet sind als Vorrichtungen gemäß dem ersten und/oder zweiten Aspekt der vorliegenden Erfindung. Dabei können Mittel, die von den jeweiligen Vorrichtungen, die gemäß dem ersten und/oder zweiten Aspekt der vorliegenden Erfindung ausgebildet sind, ausgeführt und/oder gesteuert werden. Dabei können entweder alle Mittel der jeweiligen Vorrichtungen gesteuert werden, oder alle Mittel der jeweiligen Vorrichtungen ausgeführt werden, oder ein oder mehrere Mittel gesteuert und ein oder mehrere Mittel ausgeführt werden.

Diese drei Aspekte der vorliegenden Erfindung weisen u.a. die nachfolgend beschriebenen - teilweise beispielhaften - Eigenschaften auf.

Ein Micro-Grid weist einen oder mehrere Ankoppelungspunkte zu dem übergeordneten öffentlichen Stromnetz auf. Ferner kann jedoch ein Micro-Grid auch autark, d.h. unabhängig vom übergeordneten Stromnetz betrieben werden. In einem Bedarfsfall, wenn beispielsweise die von dem Micro-Grid umfasste zumindest eine Energiequelle (z. B. eine Energieerzeugungsanlage in Form einer Windenergieanlange, einer Photovoltaikanlage, und/oder eines Blockheizkraftwerks, um nur einige nicht-limitierende Beispiele zu nennen) die von von dem Micro-Grid umfassten zumindest einen Verbraucher angeforderte elektrische Energie nicht oder nicht vollständig decken kann, kann die benötigte elektrische Energie von dem öffentlichen Stromnetz bezogen werden. In einem weiteren Bedarfsfall, in dem der bzw. die von dem Micro-Grid umfasste(n) Verbraucher weniger elektrische Energie benötigen, als von der zumindest einen Energiequelle des Micro-Grids erzeugt wird, kann diese überschüssige elektrische Energie von dem Micro-Grid in das öffentliche Stromnetz eingespeist werden. Dieser Austausch ist über den einen oder die mehreren Ankopplungspunkte zwischen dem Micro-Grid und dem öffentlichen Stromnetz möglich.

Ein Micro-Grid ist beispielsweise autark, indem es z. B. Teil von einer LEC ist. Eine derartige LEC ist beispielsweise ein Wohnquartier und umfasst sämtliche energietechnischen Elemente bzw. Infrastruktur(en) des Wohnquartiers. Eine derartige LEC kann beispielsweise bei einem Bilanzausgleich innerhalb des Micro-Grids zwischen Erzeugung und Verbrauch vorteilhaft sein, da beispielsweise in Deutschland keine Abgaben gemäß Erneuerbare-Energien-Gesetz (EEG) zu zahlen sind und deswegen derartige Modelle für die Bewohner eines solchen Wohnquartiers finanziell attraktiv sind.

Micro-Grids zeichnen sich insbesondere dadurch aus, dass eine räumliche Nähe zwischen der Erzeugung und dem Verbrauch der erzeugten Energie besteht, nämlich beispielsweise innerhalb eines Wohnquartiers.

Ferner sind derartige Micro-Grids an einem übergeordneten Verteilnetz - im Sinne dieses Gegenstands auch als öffentliches Stromnetz oder übergeordnetes Stromnetz bezeichnet - angekoppelt. Das Micro-Grid selber ist nicht frequenzgesteuert. Micro-Grids sind ferner dadurch gekennzeichnet, dass die von dem Micro-Grid umfassten Bestandteile, wie etwa Energiequellen bzw. Erzeugungsanlagen und Leitungen, beispielsweise nicht (alle) von einem einzelnen Eigentümer sein müssen, sondern sich das Micro-Grid aus Bestandteilen unterschiedlicher Eigentümer zusammensetzt. Die von dem Micro-Grid umfassten Bestandteile können beispielsweise auch von einem Eigentümer bzw. Besitzer (z. B. Tankstellenbesitzer) sein.

Eine von dem Micro-Grid umfasste Energiequelle ist beispielsweise eine Erzeugungseinrichtung, z. B. ein (Mikro) Blockheizkraftwerk, eine Windenergieanlage, eine Photovoltaikanlage oder dergleichen, die jeweils eine zur Erzeugung von elektrischer Energie geeignete Einrichtung darstellen.

Ein von dem Micro-Grid umfasster Verbraucher ist beispielsweise eine Last, wie z. B. eine an von dem Micro-Grid umfassten (Strom-) Leitungen angeschlossene elektrische Einrichtung, wie z. B. ein Haushaltsgerät (z. B. Kühlschrank und/oder Waschmaschine), eine Unterhaltungselektronikeinrichtung, ein sonstiger elektrischer Verbraucher, oder ein beispielsweise zum Laden angeschlossenes Elektrofahrzeug, um nur einige nicht-limitierende Beispiele zu nennen.

Der eine oder die mehreren Strom- und/oder Spannungsparameter werden von dem zumindest einen Sensor beispielsweise erfasst (z. B. gemessen). Der zumindest eine Sensor ist oder umfasst beispielsweise ein Mittel (z. B. Messeinrichtung oder Sensorik), das den einen oder die mehreren Strom- und/oder Spannungsparameter erfassen bzw. ermitteln kann. Der eine oder die mehreren Strom- und/oder Spannungsparameter sind an dem Ankoppelungspunkt zwischen Micro-Grid und Verteilnetz erfassbar (z. B. messbar). Dabei ist insbesondere die Vorrichtung nach dem ersten und/oder zweiten Aspekt der Erfindung beispielsweise derart mit dem Ankoppelungspunkt operativ (z. B. elektrisch) verbunden, dass eine Überwachung (z. B. Messung und/oder sensorische Überwachung) des Ankoppelungspunktes, des Micro-Grids und/oder des öffentlichen Stromnetzes durchführbar ist.

Das Stromnetz ist in der Regel dem Micro-Grid übergeordnet. Im Sinne des vorliegenden Gegenstands bedeutet dies insbesondere, dass die Stabilität des öffentlichen Stromnetzes gegenüber der Stabilität des mit dem öffentlichen Stromnetz (über einen oder mehrere Ankopplungspunkte) verbundenen Micro-Grids Vorrang genießt. Entsprechend kann beispielsweise der Fall eintreten, dass eine Stromversorgung des Micro-Grids unterbrochen wird bzw. eine Stromversorgung von von dem Micro-Grid umfassten Verbrauchern unterbrochen wird, wenn dadurch die Stabilität des dem Micro-Grid übergeordneten öffentlichen Stromnetzes sichergestellt werden kann.

Unter dem Begriff "abweichende Frequenz" wird insbesondere verstanden, dass das Micro-Grid in einer von dem öffentlichen Stromnetz abweichenden Nennfrequenz betrieben werden kann. Die Stabilität des öffentlichen Stromnetzes ist insbesondere davon abhängig, dass die in dem öffentlichen Stromnetz herrschende Netzfrequenz konstant gehalten wird. Als Beispiel sei an dieser Stelle das gewöhnliche Verteilnetz als Stromnetz für Verbraucher angeführt, das stabil ist, wenn eine (Nenn-) Frequenz von 50 Hz vorliegt. Diese Frequenz kann durch ein Ab- bzw. Zuschalten und/oder eine Steuerung und/oder Regelung von Energiequellen und/oder Verbrauchen, wie etwa Lasten, erhöht bzw. verringert werden.

Das Micro-Grid ist zumindest für die Dauer einer vordefinierten Zeitspanne in einer von dem öffentlichen Stromnetz abweichenden Frequenz betreibbar. Die vordefinierte Zeitspanne kann beispielsweise nur wenige Sekunden, oder Minuten betragen, oder auch längere Zeitspannen betreffen, wie etwa einen Tag, eine Woche, einen Monat oder länger. Die Dauer der vordefinierten Zeitspanne ist beispielsweise in Abhängigkeit der (Nenn-) Frequenz des öffentlichen Stromnetzes bestimmt. Zum Beispiel kann die vordefinierte Zeitspanne einen Tag, eine Woche, einen Monat oder länger betragen, solange das Micro-Grid autark von dem öffentlichen Stromnetz betreibbar ist. Dies setzt beispielsweise voraus, dass die von dem zumindest einen Verbraucher des Micro-Grids angeforderte elektrische Energie vollständig durch die zumindest eine Energiequelle des Micro-Grids gedeckt werden kann, und zudem nicht bzw. nicht mehr elektrische Energie von der zumindest einen Energiequelle des Micro-Grids erzeugt wird, als von dem zumindest einen Verbraucher des Micro-Grids verbraucht wird. Kleinere Schwankungen beispielsweise im Rahmen einer Abweichung der erzeugten elektrischen Energie im Verhältnis zu der verbrauchten elektrischen Energie von bis 1%, 2%, 3%, 4%, 5%, 10%, 15% oder mehr können beispielsweise ausgeglichen werden, z. B. mittels eines von dem Micro-Grid umfassten Speichers.

Ein mit dem öffentlichen Stromnetz operativ verbundenes Micro-Grid im oben genannten Sinne ist mittels der Vorrichtung nach dem ersten und/oder zweiten Aspekt der Erfindung vollständig rückwirkungsfrei in Bezug auf das öffentliche Stromnetz. Die Vorrichtung nach dem ersten und/oder zweiten Aspekt der Erfindung stellt insbesondere eine Hardwarelösung bereit, mittels der ein Klassifizieren eines Micro-Grids im Sinne der Erfindung möglich ist.

Die Vorrichtung nach dem ersten und/oder zweiten Aspekt der Erfindung ermöglicht insbesondere eine hardwaretechnische Trennung des öffentlichen Stromnetzes (z. B. Verteilnetz) von dem Micro-Grid. Die Vorrichtung nach dem ersten und/oder zweiten Aspekt der Erfindung ermöglicht mittels des zumindest einen Sensors und mittels der zumindest einen Entkopplungseinheit eine Brücke zwischen z. B. einem bekannten Umrichter und einem konventionellen Erzeuger, indem eine oder mehrere Auswirkungen von leistungstechnischen Komponenten des Micro-Grids steuer- und/oder regelbar sind, z. B. über eine Steuerung und/oder Regelung von der zumindest einen Energiequelle und/oder dem zumindest einen Verbraucher im Micro-Grid.

Die hardwaretechnische Trennung des öffentlichen Stromnetzes (z. B. Verteilnetz) von dem Micro-Grid ist über eine technische Entkopplung des lokalen Netzgebietes in Form des Micro-Grids mit mindestens einem gemeinsamen Netzstrang mit dem öffentlichen Stromnetz ermöglicht. Die technische Entkopplung entspricht insbesondere einer galvanischen Trennung mittels der zumindest einen Entkopplungseinheit.

Die zumindest eine Entkopplungseinheit ist beispielsweise zumindest ein Umrichter oder umfasst einen derartigen Umrichter, wobei ein derartiger Umrichter beispielsweise eine (technische) Entkopplung zwischen dem Micro-Grid und dem öffentlichen Stromnetz realisiert.

Ein derartiger Umrichter ist beispielsweise ein leistungselektronischer Wechselrichter, der z. B. hinter einer Ortsnetzstation oder durch einen Hochsetzsteller und/oder einen Tiefsetzsteller direkt am Mittelspannungsanbindungspunkt eines Ortsnetzes angeordnet und von der Vorrichtung gemäß dem ersten und/oder zweiten Aspekt der Erfindung umfasst ist. Durch diese technische Entkopplung lassen sich die technischen Spezifikationen für ein Micro-Grid (z. B. ein lokaler Netzbereich in Form einer LEC) vereinfachen bzw. gegenüber dem öffentlichen Stromnetz vereinfachen. So können technische Größen (insbesondere Frequenz und Spannung) so verändert oder dynamisch genutzt werden, dass diese beispielsweise die Steuerung und/oder Regelung der leistungstechnischen Komponenten des Micro-Grids (z. B. innerhalb der LEC) entschieden vereinfachen.

Durch eine technische Entkopplung des Micro-Grids mittels der zumindest einen Entkopplungseinheit, z. B. durch einen Wechselrichter, einen Hochsetzsteller und/oder einen Tiefsetzsteller, und/oder einen modifizierten Transformator mit einer erhöhten Kurzschlussspannung uₖ, um nur einige nicht-limitierende Beispiele zu nennen, wird die Rückwirkung der lokalen Effekte des Micro-Grids gegenüber dem öffentlichen Stromnetz vermieden. Insbesondere die Anforderung an leistungselektronische Komponenten in Bezug auf Oberwellen und Flicker (z. B. Spannungsschwankungen, die zu Leuchtlichtschwankungen führen können) können in dieser technischen Topologie, ermöglicht durch die Vorrichtung nach dem ersten und/oder zweiten Aspekt der Erfindung, abgesenkt und letztendlich Kosten gesenkt werden.

Das Micro-Grid braucht in der Regel eine technische Verbundenheit zu dem öffentlichen Stromnetz, z. B. da mittels des Micro-Grids mit elektrischer Energie versorgte Teilnehmer (Verbraucher) die Möglichkeit haben müssen, auch andere Strombezugsquellen zu nutzen. Dies kann beispielsweise durch entsprechende Gesetze vorgeschrieben sein.

Indem das Micro-Grid zumindest für eine vordefinierte Zeitspanne in einer von dem öffentlichen Stromnetz abweichenden Frequenz betreibbar ist, müssen die von dem Micro-Grid umfassten leistungstechnischen Komponenten, wie die zumindest eine Energiequelle und der zumindest eine Verbraucher, einfachere Rahmenbedingungen in Bezug auf Spannung, und Verhalten im Falle einer abweichenden (Nenn-) Frequenz des Micro-Grids erfüllen. Dies ermöglicht den Vorteil, dass günstigere leistungstechnische Komponenten in dem Micro-Grid einsetzbar sind.

Die Vorrichtung nach dem ersten und/oder zweiten Aspekt der Erfindung ist beispielsweise von einem Ortsnetztransformator umfasst oder mit diesem operativ verbunden. Entsprechend ist die zumindest eine Entkopplungseinheit der Vorrichtung beispielsweise ein leistungselektronischer Wechselrichter, der z. B. hinter der Ortsnetzstation angeordnet ist. Alternativ ist die zumindest eine Entkopplungseinheit der Vorrichtung beispielsweise ein Hochsetzsteller, und/oder ein Tiefsetzsteller, der hinter der Ortsnetzstation als Übergabepunkt zwischen dem öffentlichen Stromnetz (Verteilnetz) und dem Micro-Grid angeordnet ist.

Das öffentliche Stromnetz ist dem Micro-Grid entsprechend vorgelagert. Das öffentliche Stromnetz ist beispielsweise eine Backup-Versorgung, z. B. für oben bereits beschriebenen Bedarfsfall einer Überlast, die von dem zumindest einen Verbraucher des Micro-Grids verursacht ist, und/oder in dem Bedarfsfall eines Minderlast-Ausgleichs, in dem der zumindest eine Verbraucher des Micro-Grids weniger elektrische Energie verbraucht, als von der zumindest einen Energiequelle des Micro-Grids erzeugt wird.

Die zumindest eine Entkopplungseinheit realisiert beispielsweise eine technische Entkopplung des öffentlichen Stromnetzes, z. B. mittels eines Umrichtens in Gleichstrom. Beispielsweise kann die Vorrichtung nach dem ersten und/oder zweiten Aspekt der Erfindung mittels der zumindest einen Entkopplungseinheit (z. B. ein Umrichter) zumindest einen Abgriff (z. B. einen Gleichstromabgriff) bereitstellen.

Die Vorrichtung gemäß dem ersten und/oder zweiten Aspekt der Erfindung ist beispielsweise an einem Ankoppelungspunkt zwischen dem Micro-Grid und dem öffentlichen Stromnetz angeordnet. Ein derartiger Ankopplungspunkt ist beispielsweise ein Element, das sowohl von dem Micro-Grid als auch von dem öffentlichen Stromnetz gemeinsam genutzt wird. Dies kann beispielsweise ein gemeinsam genutztes Leitungsstück oder Leitungsabschnitt bzw. eine gemeinsam genutzte Leitung, und/oder eine Verbindungsstelle, die zwischen dem Micro-Grid bzw. einem von dem Micro-Grid umfassten Element und dem öffentlichen Stromnetz bzw. einem von dem öffentlichen Stromnetz umfassten Element besteht. Es kann sich beispielsweise um eine Koppelleitung von dem Micro-Grid zu dem öffentlichen Stromnetz handeln, um nur ein nicht-limitierendes Beispiel zu nennen.

Das Micro-Grid ist beispielsweise ein Gleichstromnetz oder ein Wechselstromnetz, oder ein Drei-Phasen-Stromnetz (auch als Drehstromnetz bezeichnet). Das Micro-Grid muss entsprechend insbesondere kein Drei-Phasen-Stromnetz sein, sondern kann beispielsweise für eine Gleichstrom Photovoltaik, oder für einen Gleichstrom Ladestrom für Elektrofahrzeuge eingerichtet und/oder ausgebildet sein. Dies ermöglicht eine einfache Nutzung z. B. von Photovoltaikanlagen oder ein einfaches Laden von Elektrofahrzeugen.

Der eine oder die mehreren Strom- und/oder Spannungsparameter sind beispielsweise indikativ für einen Betriebszustand des öffentlichen Stromnetzes und/oder des Micro-Grids. Der eine oder die mehreren Strom- und/oder Spannungsparameter repräsentieren oder umfassen beispielsweise einen oder mehrere ermittelte oder erfasste Messwerte. Der eine oder die mehreren Messwerte können beispielsweise einen Wert für eine Spannung, einen Strom, eine Frequenz, eine Wirk- und/oder Blindleistung, oder eine Kombination hiervon repräsentieren, um nur einige nicht-limitierende Beispiele zu nennen. Der zumindest einen Sensor erfasst (z. B. misst) beispielsweise den einen oder die mehreren Strom- und/oder Spannungsparameter mittels einer Sensorik. Basierend auf dem einen oder den mehreren Messwerten können beispielsweise der eine oder die mehreren Strom- und/oder Spannungsparameter ermittelt bzw. bestimmt werden.

Ferner können der eine oder die mehreren Strom- und/oder Spannungsparameter beispielsweise indikativ für einen Energiefluss zwischen dem Micro-Grid und dem öffentlichen Stromnetz sein. Der Energiefluss ist beispielsweise eine Weitergabe von elektrischer Energie von dem Micro-Grid an das öffentliche Stromnetz, und/oder von dem öffentlichen Stromnetz an das Micro-Grid. Für den Fall, dass der Energiefluss von dem Micro-Grid zu dem öffentlichen Stromnetz und von dem öffentlichen Stromnetz zu dem Micro-Grid ermittelt wird, kann beispielsweise die Differenz des (elektrischen) Energieflusses ermittelt werden, die z. B. das Micro-Grid mehr gegenüber einem Bezug von elektrischer Energie in das öffentliche Stromnetz einspeist oder vice versa.

Der zumindest eine Sensor ist beispielsweise ein Messwandler für Strom und/oder Spannung, der beispielsweise mit dem Ankopplungspunkt operativ (z. B. elektrisch) verbunden ist, oder alternativ von dem Ankopplungspunkt umfasst ist.

In einer beispielhaften Ausgestaltung nach allen Aspekten ist über den einen oder die mehreren Strom- und/oder Spannungsparameter, die seitens des zumindest einen Sensors ermittelbar sind, eine Steuerung und/oder Regelung von der zumindest einen Energiequelle und/oder von dem zumindest einen Verbraucher des Micro-Grids durchführbar.

Die Steuerung und/oder Regelung von der zumindest einen Energiequelle und/oder von dem zumindest einen Verbraucher des Micro-Grids kann beispielsweise mittels einer bestimmten Steuerinformation erfolgen. Beispielsweise kann von einem Prozessor der Vorrichtung gemäß dem zweiten Aspekt der Erfindung eine derartige Steuerinformation bestimmt werden, z. B. zumindest teilweise basierend auf dem einen oder den mehreren Strom- und/oder Spannungsparametern, die die zumindest eine Energiequelle und/oder den zumindest einen Verbraucher des Micro-Grids dazu veranlasst, eine Aktion durchzuführen. Beispielsweise kann die zumindest eine Energiequelle derart gesteuert werden, dass diese keine, weniger oder mehr elektrische Energie erzeugt, soweit möglich. Ferner kann der zumindest eine Verbraucher gesteuert und/oder geregelt werden, weniger, mehr oder gar keine elektrische Energie zu verbrauchen, indem der zumindest eine Verbraucher beispielsweise deaktiviert wird, um nur ein nicht-limitierendes Beispiel zu nennen.

Die bestimmte Steuerinformation zur Steuerung und/oder Regelung von der zumindest einen Energiequelle und/oder von dem zumindest einen Verbraucher des Micro-Grids ist beispielsweise ausgebbar bzw. deren Ausgabe ist veranlassbar.

Die Ausgabe bzw. die Veranlassung deren Ausgabe erfolgt beispielsweise, indem die Steuerinformation an die zumindest eine Energiequelle und/oder an den zumindest einen Verbraucher übermittelt wird. Z. B. kann das Übermitteln über ein Kommunikationsnetz erfolgen, z. B. das Internet, über ein Local Area Network (LAN), über ein drahtloses Kommunikationsnetz (z. B. gemäß dem Wireless Local Area Network (WLAN) und/oder Bluetooth Standard), über ein Mobilfunknetz (z. B. gemäß dem General Packet Radio Service (GPRS), Universal Mobile Telecommunications System (UMTS), oder Long Term Evolution (LTE)-Standard, oder über eine (z. B. lokale) Funklösung (z. B. gemäß der Long Range Wide Area Network (LoRaWAN) Spezifikation), um nur einige nicht-limitierende Beispiele zu nennen), das zur Kommunikation zwischen den von dem Micro-Grid umfassten leistungstechnischen Komponenten verwendet werden kann. Es versteht sich, dass dies voraussetzt, dass diejenigen leistungstechnischen Komponenten des Micro-Grids, welche miteinander kommunizieren sollen, eine oder mehrere zur derartigen Kommunikation ausgebildete Kommunikationsschnittstellen umfassen oder mit diesen verbindbar sind. Die Vorrichtung nach dem ersten und/oder zweiten Aspekt der Erfindung umfasst beispielsweise eine Kommunikationsschnittstelle zur Kommunikation mit der zumindest einen Energiequelle und/oder mit dem zumindest einen Verbraucher des Micro-Grids.

In einer beispielhaften Ausgestaltung nach allen Aspekten ist die Steuerung und/oder Regelung von der zumindest einen Energiequelle und/oder von dem zumindest einen Verbraucher des Micro-Grids basierend auf dem einen oder den mehreren Strom- und/oder Spannungsparametern durchführbar, die einem oder mehreren von dem Verteilnetz bzw. öffentlichen Stromnetz vordefinierten Grenzwerten genügen.

Beispielsweise kann derart seitens des öffentlichen Stromnetzes vorgegeben sein, welche Grenzwerte an dem Ankopplungspunkt eingehalten werden sollen, so dass die Stabilität des Stromnetzes gewährleistet werden kann. Beispielsweise kann vordefiniert sein, dass bestimmte Spannungs-, Strom-, Wirkleistungs-, Blindleistungs-, und/oder Frequenzwerte eingehalten werden, für den Fall, dass z. B. elektrische Energie von dem Micro-Grid bezogen oder von dem Micro-Grid in das öffentliche Stromnetz eingespeist wird.

Entsprechend kann beispielsweise eine Steuerinformation zur Steuerung und/oder Regelung der zumindest einen Energiequelle und/oder des zumindest einen Verbrauchers des Micro-Grid bestimmt werden, so dass die zumindest eine Energiequelle und/oder der zumindest eine Verbraucher derart gesteuert und/oder geregelt werden, dass die Stabilität des öffentlichen Stromnetzes nicht gefährdet wird.

In einer beispielhaften Ausgestaltung nach allen Aspekten sind basierend auf dem einen oder den mehreren Strom- und/oder Spannungsparametern, und dem einen oder den mehreren von dem öffentlichen Stromnetz vordefinierten Grenzwerten, eine Wirkleistungs- und/oder Spannungsregelung des Micro-Grids durchführbar.

Beispielsweise können der eine oder die mehreren Strom- und/oder Spannungsparameter basierend auf einem sogenannten Fahrplan vordefiniert sein, so dass an dem Ankopplungspunkt zu jeder Zeit gemäß dem Fahrplan entsprechend eine Wirkleistungs- und/oder Spannungsregelung des Micro-Grids erfolgt. Ein derartiger Fahrplan definiert beispielsweise Sollwerte als Grenzwerte für Spannung, Strom, Frequenz, Wirkleistung und/oder Blindleistung, um nur einige nicht-limitierende Beispiele zu nennen, die an einem bestimmten Ankopplungspunkt (bzw. Ankopplungspunkte für den Fall, dass eine Vielzahl von Ankopplungspunkten (z. B. mindestens zwei Ankopplungspunkte) zwischen dem Micro-Grid und dem öffentlichen Stromnetz bestehen) anliegen. Beispielsweise können die von dem Fahrplan definierten Parameter an dem zumindest einen Ankopplungspunkt zwischen dem Micro-Grid und dem öffentlichen Stromnetz gemäß einer P(U)-Regelung, oder einer P-Sollwertregelung erfolgen. Insbesondere sollen die gemäß dem Fahrplan vordefinierten Sollwerte nur für das öffentliche Stromnetz gelten. Die zumindest eine Energiequelle und/oder der zumindest eine Verbraucher des Micro-Grids sind derart steuer- und/oder regelbar, dass insbesondere die (Nenn-) Frequenz des Micro-Grids stark von der (Nenn-) Frequenz des öffentlichen Stromnetzes abweicht bzw. sogar variabel ist.

Beispielsweise ist es mittels der Vorrichtung gemäß dem ersten und/oder zweiten Aspekt möglich, an der Anschlussseite zum öffentlichen Stromnetz Rahmenbedingungen zu schaffen und einzuhalten, wobei simultan in dem Micro-Grid durchaus eine oder mehrere Verletzungen (d.h. abweichende Strom- und/oder Spannungsparameter) dieser Rahmenbedingungen, die beispielsweise durch die vordefinierten Grenzwerte des öffentlichen Stromnetzes vorgegeben sind, möglich sind.

Derart kann durch die technische Entkoppelung z. B. die Frequenz des Micro-Grids als (lokale) Steuerinformation für eine Leistungsbilanz des öffentlichen Stromnetzes genutzt werden, wobei die Leistungsbilanz des öffentlichen Stromnetzes ausgeglichen sein sollte (z. B. wie dies im europäischen Verbundsystem funktioniert). Zusätzlich können aber auch eine Steuerung und/oder Regelung nach dem P(U) Ansatz umgesetzt werden, so dass z. B. eine absinkende Spannung als Verbrauchssignal (lokal) im Micro-Grid verwendet wird und beispielsweise die Energiequelle bzw. zumindest ein Speicher des Micro-Grids entsprechend gesteuert und/oder geregelt werden können.

Das Micro-Grid kann folglich einerseits einen Fahrplan im oben genannten Sinne gewährleisten, da z.B. die dezentrale Regelung, Leistungsfrequenzregelung, oder P(U) die Umsetzung des vordefinierten Fahrplans am Übergabepunkt bzw. Ankopplungspunkt zwischen Micro-Grid und öffentlichem Stromnetz sicherstellen.

In einer beispielhaften Ausgestaltung nach allen Aspekten ermöglicht das Micro-Grid eine gegenüber dem öffentlichen Stromnetz erhöhte Qualität der Versorgung von dem zumindest einen Verbraucher.

Unter einer erhöhten Qualität der Versorgung wird gegenständlich insbesondere verstanden, dass das Micro-Grid eine erhöhte Verfügbarkeit oder Versorgungszuverlässigkeit, eine verbesserte Spannungsqualität, eine verbesserte Stabilität der Netzfrequenz, oder eine Kombination hiervon, gegenüber dem öffentliche Stromnetz aufweist.

In einer beispielhaften Ausgestaltung nach allen Aspekten sind der eine oder die mehreren Grenzwerte von einer zentralen Einheit des öffentlichen Stromnetzes an die Vorrichtung übermittelbar.

Die zentrale Einheit des öffentlichen Stromnetzes ist beispielsweise eine Netzleitstelle. Der eine oder die mehreren Grenzwerte sind beispielsweise mittels einer Kommunikation an die Vorrichtung am Ankopplungspunkt übertragbar. Die Vorrichtung umfasst beispielsweise eine Kommunikationsschnittstelle, über die der eine oder die mehreren Strom- und/oder Spannungsparameter beispielsweise empfangbar sind.

Es besteht also beispielsweise eine Kommunikationsverbindung zwischen dem Micro-Grid und dem öffentlichen Stromnetz bzw. zumindest einem Teil des öffentlichen Stromnetzes.

In einem ersten Fall, erfolgt z. B. ein Erhalten von dem einen oder den mehreren Grenzwerten zur Steuerung und/oder Regelung der zumindest einen Energiequelle und/oder von dem zumindest einen Verbraucher auf Protokollebene zwischen dem Micro-Grid und dem Stromnetz. Dann erfolgt ein Austausch der Grenzwerte auf Protokollebene, z. B. auf Schicht 5 bis Schicht 7 des sieben Schichten umfassenden OSI-Modells. Zusätzlich können weitere Informationen, z. B. der eine oder die mehreren Strom- und/oder Spannungsparameter, oder sonstige Parameter, Messwerte und/oder Informationen auf Protokollebene zwischen dem Micro-Grid bzw. von diesem umfasste leistungselektronische Komponenten und dem öffentlichen Stromnetz bzw. von diesem umfasste Elemente oder Einrichtungen (z. B. Server einer Netzleitstelle) übermittelt werden.

In einer beispielhaften Ausgestaltung nach allen Aspekten ist die Vorrichtung eine Netzentkopplereinheit oder - vorrichtung oder zumindest ein Teil von diesen. Dies kann beispielsweise ein Aggregat oder dergleichen sein, dass die technische Entkopplung des öffentlichen Stromnetzes von dem Micro-Grid neben der Entkopplungseinheit oder zusätzlich zu der Entkopplungseinheit gewährleistet, wie etwa ein Transformator mit ausreichend hoher Kurzschlussspannung uₖ.

In einer beispielhaften Ausgestaltung nach allen Aspekten ist die Entkopplungseinheit ein Umrichter, insbesondere ein Wechselrichter und/oder ein Gleichrichter, oder umfasst einen derartigen Umrichter.

Entsprechend kann beispielsweise von dem zumindest einen Verbraucher des Micro-Grids Wechsel- und/oder Gleichstrom bezogen, oder von der zumindest einen Energiequelle Wechsel- und/oder Gleichstrom in das Micro-Grid eingespeist werden, wobei z. B. im Wesentlichen gleichzeitig elektrische Energie aus dem öffentlichen Stromnetz in das Micro-Grid eingespeist wird, und/oder elektrische Energie von dem Micro-Grid in das öffentliche Stromnetz ausgespeist werden kann.

Unter der Formulierung, dass der Umrichter ein Wechselrichter und ein Gleichrichter ist, wird im Sinne der Erfindung verstanden, dass der Umrichter beispielsweise derart eingerichtet ist, dass dieser in der Funktionsweise zwischen einem Wechselrichter und einem Gleichrichter schaltbar ist. Alternativ umfasst diese Formulierung die Möglichkeit, dass die Vorrichtung nach dem ersten und/oder zweiten Aspekt der Erfindung zumindest einen Wechselrichter und zumindest einen Gleichrichter umfasst. Entsprechend kann beispielsweise der zumindest eine Verbraucher des Micro-Grids sowohl Wechselstrom, als auch Gleichstrom, z. B. bereitgestellt über entsprechende Abgriffe der Vorrichtung, beziehen.

In einer beispielhaften Ausgestaltung nach allen Aspekten ist die Entkopplungseinheit ein Hochsetzsteller, ein Tiefsetzsteller, oder eine Kombination hiervon.

Der Hochsetzsteller und/oder der Tiefsetzsteller stellen jeweils beispielsweise einen oder mehrere Abgriffe mit verschiedenen Spannungshöhen bereit. Dies ist insbesondere für Elektrofahrzeuge vorteilhaft, die dann entsprechend der benötigten Spannung diese zum Laden an dem entsprechenden Abgriff beziehen können.

In einer beispielhaften Ausgestaltung nach allen Aspekten umfasst die Vorrichtung zumindest zwei Gleichrichter, so dass an zumindest zwei Abgriffen, die von der Vorrichtung umfasst sind, jeweils unterschiedliche Gleichspannungen bereitstellbar sind.

Die Vorrichtung kann beispielsweise insgesamt zwei Gleichrichter umfassen, so dass die zumindest eine Entkopplungseinheit z. B. ein Gleichrichter ist oder einen Gleichrichter umfasst, und zusätzlich zumindest ein weiterer Gleichrichter von der Vorrichtung oder von der Entkopplungseinheit der Vorrichtung umfasst ist.

Entsprechend können beispielsweise mehrere (zumindest zwei) unterschiedliche Gleichspannungen, z. B. mittels einer 1000 V DC-Schiene als Übergabepunkt, und mittels einer 800 V, oder 400 V DC-Schiene bereitgestellt werden. Ferner kann beispielsweise für den Fall, dass ein Tiefsetzsteller vorgesehen ist, dieser z. B. mehrfach für verschiedene Ladesäulen des Micro-Grids als Verbraucher Gleichstrom verschiedener Spannung zum Laden der Elektrofahrzeuge bereitstellen.

In einer beispielhaften Ausgestaltung nach allen Aspekten umfasst die Vorrichtung ferner:
- zumindest einen Transformator mit einer definierten Kurzschlussspannung, wobei mittels der definierten Kurzschlussspannung ein Grad der mit dem zumindest einen Transformator realisierten Entkopplung zwischen dem Micro-Grid und dem öffentlichen Stromnetz eingestellt wird.

Derart ist es beispielsweise möglich, dass kein Signal (mehr) von dem Micro-Grid über den Transformator an das Verteilnetz bzw. das öffentliche Stromnetz und/oder vice versa übermittelbar ist.

Alternativ kann beispielsweise ein Ortsnetztransformator mit einer veränderten Dimensionierung mit der Vorrichtung operativ verbunden sein oder von dieser umfasst sein, wobei die veränderte Dimensionierung eine erhöhte Kurzschlussspannung des Ortsnetztransformators ermöglicht, so dass z. B. kein Signal (mehr) an das öffentliche Stromnetz übertragbar ist. Die Auslegung des Ortsnetztransformators ist beispielsweise derart, dass z. B. bei Überlast die Versorgungsspannung des Micro-Grids wegbricht, und nicht die des öffentlichen Stromnetzes bzw. die Versorgung des öffentlichen Stromnetzes gefährdet wird. Dies hat beispielsweise den Vorteil, dass konventionelle Technik eingesetzt wird, jedoch die zwingend erforderliche technische Entkopplung gewährleistet wird.

Eine Steuerinformation, die analog zur Steuerung und/oder Regelung der zumindest einen Energiequelle und/oder des zumindest einen Verbraucher verwendbar ist, kann beispielsweise in analoger Weise auch eine Steuerung und/oder Regelung von dem Ortsnetztransformator bewirken.

Der Ortsnetztransformator ist beispielsweise von einer Transformatorenstation, auch Umspannstation, Netzstation, Ortsnetzstation oder kurz Trafostation genannt, umfasst und wandelt elektrische Energie aus dem Mittelspannungsnetz mit einer elektrischen Spannung von etwa 10 bis 36 kV auf die in Niederspannungsnetzen (Ortsnetzen,) verwendeten 400 und/oder 230 V zur Versorgung der Niederspannungskunden um.

Im vorliegenden Fall wird ein derartiger Ortsnetztransformator beispielsweise zur Spannungswandlung für das Micro-Grid eingesetzt.

In einer beispielhaften Ausgestaltung nach allen Aspekten sind mittels des zumindest einen Sensors ausschließlich ein oder mehrere Strom- und/oder Spannungsparameter des Micro-Grids ermittelbar, wobei basierend auf diesem einen oder diesen mehreren Strom- und/oder Spannungsparametern eine Steuerung und/oder Regelung von der zumindest einen Energiequelle und/oder von dem zumindest einen Verbraucher des Micro-Grids durchführbar ist.

Dies erfordert beispielsweise, dass seitens des Micro-Grids mitunter auftretende Schwankungen an dem Ankopplungspunkt zu dem öffentlichen Stromnetz ausgeglichen werden können.

In diesem Fall kann also eine Micro-Grid-Steuerung und/oder -Regelung (bzw. der von dem Micro-Grid umfassten leistungselektronische Komponenten) beispielsweise dafür sorgen, dass die Stabilität des öffentlichen Stromnetzes gewährleistet (z. B. die (Nenn-) Frequenz aufrechterhalten) wird.

In einer beispielhaften Ausgestaltung nach allen Aspekten ist in einem Überlastfall, der von dem einen oder den mehreren Strom- und/oder Spannungsparametern, die von dem zumindest einen Sensor ermittelbar sind, repräsentiert ist, primär die Versorgung des Micro-Grids mit elektrischer Energie des Verteilnetzes bzw. des Stromnetzes unterbrochen.

Zu diesem Zweck wird beispielsweise der Ankoppelungspunkt (z. B. die gemeinsam genutzten Leitungsabschnitte zwischen Micro-Grid und öffentlichem Stromnetz) mittels des zumindest einen Sensors so gemessen und sensorisch überwacht, dass aus den Messwerten derart eine Steuerinformation bestimmt werden kann, dass eine Micro-Grid Steuerung und/oder Regelung (bzw. von dem Micro-Grid umfasste leistungselektronische Komponenten) eine einer Überlastung bzw. Grenzwertverletzung des Stromnetzes entgegenwirkende Aktion auslösen kann.

Eine Überlastung bzw. Grenzwertverletzung des öffentlichen Stromnetzes kann beispielsweise durch entsprechende die Überlastung bzw. die Grenzwertverletzung des Stromnetzes charakterisierende Parameter (z. B. Größen und/oder Intervalle von Spannungs- und/oder Stromwerten (z. B. Amplituden) und/oder eine Blindleistungsbilanz) definiert sein, und dann von dem einen oder den mehreren Strom- und/oder Spannungsparametern repräsentiert sein. Anschließend kann entsprechend eine Steuerung und/oder Regelung des Micro-Grids erfolgen.

In einer beispielhaften Ausgestaltung nach allen Aspekten umfasst die Vorrichtung ferner zumindest einen Pufferspeicher oder ist mit einem von dem Micro-Grid umfassten Pufferspeicher operativ verbunden, so dass eine Steuerung und/oder Regelung zur Einspeicherung oder Ausspeicherung von elektrischer Energie in den Pufferspeicher hinein oder aus dem Pufferspeicher heraus basierend auf dem einen oder den mehreren ermittelten Strom- und/oder Spannungsparametern durchführbar ist.

Der Pufferspeicher ist beispielsweise in Form einer Batterie. Mittels eines Einspeicherns von von der zumindest einen Energiequelle erzeugter elektrischer Energie in den Speicher, kann die gespeicherte elektrische Energie beispielsweise zu einem späteren Zeitpunkt zum Verbrauch durch den zumindest einen Verbraucher des Micro-Grids aus dem Speicher ausgespeichert werden. Schwankungen in der Leistungsbilanz des Micro-Grids können derart ausgeglichen werden. Ferner kann der Speicher dazu eingesetzt werden, um beispielsweise vordefinierte Rahmenbedingungen des öffentlichen Stromnetzes einhalten bzw. ausgleichen zu können.

Die Steuerinformation kann beispielsweise eine Steuerung und/oder Regelung von dem Speicher, der von dem Micro-Grid umfasst ist, bewirken. Es versteht sich, dass das Micro-Grid ferner mehrere solcher Pufferspeicher umfassen kann.

Die oben beschriebenen, zunächst grundsätzlich für sich alleine stehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

Es zeigen:
- Fig. 1:: eine schematische Darstellung einer beispielhaften Ausführungsform eines Systems gemäß der vorliegenden Erfindung; und
- Fig. 2:: eine schematische Darstellung einer beispielhaften Ausführungsform einer Vorrichtung gemäß der vorliegenden Erfindung.

### Detaillierte Beschreibung einiger beispielhafter Ausführungsformen der Erfindung

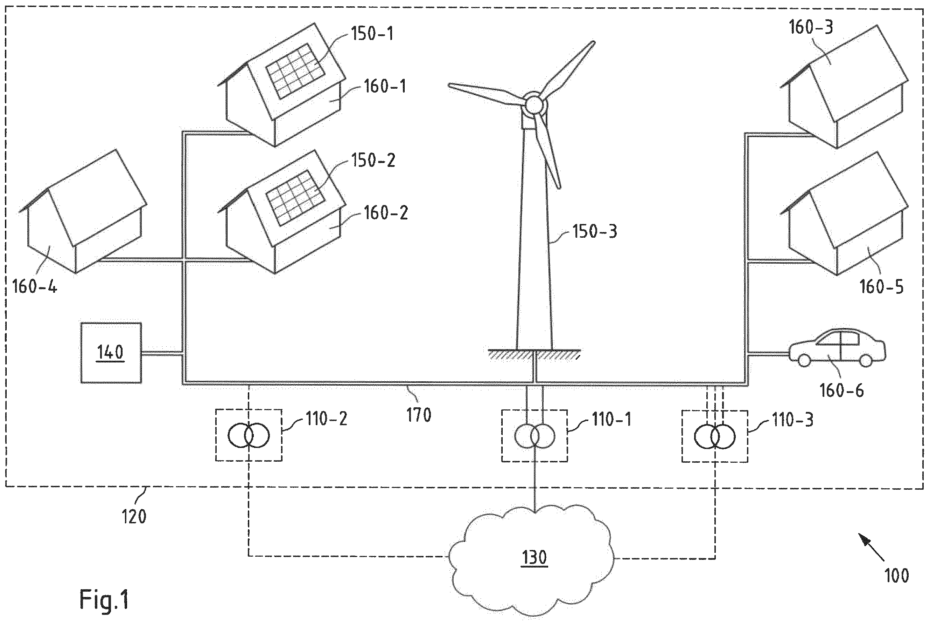

Fig. 1 ist eine schematische Darstellung einer beispielhaften Ausführungsform eines Systems 100 gemäß der vorliegenden Erfindung.

Fig. 1 zeigt ein Micro-Grid 120 mit Verteilsträngen 170 zu den von dem Micro-Grid 120 umfassten Komponenten 140-160. Das Micro-Grid 120 ist über eine Vorrichtung 110-1 mit einem übergeordneten öffentlichen Stromnetz 130 (z. B. ein Mittelspannungsnetz) verbunden. Das Stromnetz 130 kann mit mehreren (in Fig. 1 nicht dargestellt) von solchen Micro-Grids nach Art des Micro-Grids 120 verbunden sein.

Das Micro-Grid 120 ist vorliegend über drei Vorrichtungen nach dem ersten und/oder zweiten Aspekt 110-1,110-2, sowie 110-3 mit dem öffentlichen Stromnetz 130 verbunden.

Jede der Vorrichtungen 110-1, 110-2, sowie 110-3 umfasst vorliegend zumindest einen Sensor (in Fig. 1 nicht dargestellt), die beispielsweise jeweils eine Sensorik umfassen oder ausbilden können, mit denen Messwerte an dem jeweiligen Ankopplungspunkt zwischen Micro-Grid 120 und Stromnetz 130, an denen die jeweiligen Vorrichtungen 110-1, 110-2, sowie 110-3 angeordnet sind erfasst werden können. Diese Messwerte sind beispielsweise von dem einen oder den mehreren Strom- und/oder Spannungsparametern repräsentiert.

An dem Micro-Grid 120 bzw. an den Strängen 170 des Micro-Grids 120 sind Hausanschlüsse 160-1 bis 160-4, sowie ein Speicher 140, und zudem auch Energiequellen 150-1 bis 150-3 angeordnet bzw. elektrisch verbunden. Der Speicher 140 ist beispielsweise zur Speicherung von elektrischer Energie, die z. B. von einer der Energiequellen 150-1 bis 150-3 des Micro-Grids erzeugt wurde, ausgebildet.

Die Hausanschlüsse 160-1 und 160-2 stellen nicht nur elektrische Verbraucher im Sinne der Erfindung dar, sondern umfassen auch Energiequellen 150-1 und 150-2, die vorliegend als Photovoltaikanlagen ausgebildet, und von den Hausanschlüssen 160-1 sowie 160-2 umfasst sind. Das Micro-Grid 120 umfasst ferner eine weitere Energiequelle 150-3, wobei diese Erzeugungseinrichtung 150-3 des Micro-Grids vorliegend als Windenergieanlage ausgebildet ist.

Um die Stabilität des übergeordneten Stromnetzes 130 gewährleisten zu können, umfasst vorliegend jede der Vorrichtungen 110-1, 110-2, sowie 110-3 eine Entkopplungseinheit (z. B. ein Umrichter), vorliegend jeweils einen Transformator mit einer derart hohen Kurzschlussspannung, dass eine galvanische Trennung zwischen dem Micro-Grid 120 und dem öffentlichen Stromnetz 130 ermöglicht ist.

Schematisch ist dargestellt, dass die Vorrichtung 110-2 einen einzelnen Abgriff für das Micro-Grid 120 bereitstellt, die Vorrichtung 110-1 zwei verschiedene Abgriffe, z. B. jeweils eine unterschiedliche Gleichspannung (z. B. 400 V und 800V), und die Vorrichtung 110-3 drei verschiedene Abgriffe, z. B. zwei verschiedene Gleichspannungen und eine Wechselspannung bereitstellt. Entsprechend weist die Vorrichtung 110-2 beispielsweise einen Tiefsetzsteller auf, die Vorrichtung 110-1 beispielsweise zwei Tiefsetzsteller, und die Vorrichtung 110-3 beispielsweise zwei Tiefsetzsteller und einen Wechselrichter.

Durch die bereitgestellten Abgriffe der Vorrichtungen 110-1, 110-2, sowie 110-3 können beispielsweise die Verbraucher des Micro-Grids 120 mit elektrischer Energie versorgt werden. Beispielsweise kann ein Abgriff, an dem eine Gleichspannung von 400 V oder 800 V bereitgestellt wird, zum Laden des Verbrauchers 160-5 in Form eines Elektrofahrzeugs eingesetzt werden.

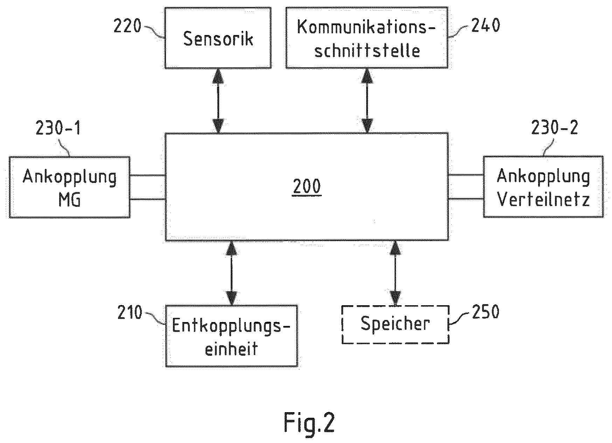

Fig. 2 zeigt eine schematische Darstellung einer beispielhaften Ausführungsform einer Vorrichtung 200, die im Kontext der vorliegenden Erfindung eingesetzt werden kann.

Die Vorrichtung 200 kann beispielsweise die Vorrichtung 110-1, 110-2, sowie 110-3 nach Fig. 1 repräsentieren. Die Vorrichtung 200 kann beispielsweise von einem von einem Micro-Grid (z. B. Micro-Grid 120 nach Fig. 1) umfassten Element (z. B. Elemente 140,150-1 bis 150-3, 160-1 bis 160-5) umfasst sein, sofern das die Vorrichtung 200 umfassende Element einen Ankopplungspunkt mit einem öffentlichen Stromnetz ausbildet bzw. darstellt (z. B. mit einem öffentlichen Stromnetz 130 nach Fig. 1).

Die Vorrichtung 200 umfasst eine Entkopplungseinheit 210, eine Sensorik 220, z. B. in Form eines Sensors zum Erfassen von einem oder mehreren Strom- und/oder Spannungsparametern, und einen optionalen Speicher 250 zur Speicherung von elektrischer Energie, die z. B. von einer Energiequelle (z. B. zumindest eines der Elemente 150-1 bis 150-3 nach Fig. 1) des Micro-Grids erzeugt wurde. Der Speicher 250 kann ebenfalls zur Speicherung von elektrischer Energie, die von einem öffentlichen Stromnetz (z. B. das öffentliche Stromnetz 130 nach Fig. 1) in das Micro-Grid eingespeist wurde, eingesetzt werden.

Die Vorrichtung 200 bildet einen Ankopplungspunkt zwischen einem Micro-Grid (z. B. Micro-Grid 120 nach Fig. 1) und einem öffentlichen Stromnetz (z. B. öffentliches Stromnetz 130 nach Fig. 1) aus. Entsprechend weist die Vorrichtung 200 eine erste operative (z. B. elektrische) Verbindung bzw. Ankopplung 230-1 zu dem Micro-Grid und eine zweite operative (z. B. elektrische) Verbindung bzw. Ankopplung 230-2 zu dem öffentlichen Stromnetz auf.

Optional umfasst die Vorrichtung 200 einen Prozessor mit zugeordnetem Arbeitsspeicher und Programmspeicher(jeweils in Fig. 2 nicht dargestellt). Der Prozessor führt beispielsweise Programmanweisungen aus, die im Programmspeicher gespeichert sind. Die Programmanweisungen führen beispielsweise ein Ermitteln von einem oder mehreren Steuerinformationen zur Steuerung und/oder Regelung von dem Micro-Grid (z. B. Micro-Grid 120 nach Fig. 1) umfassten leistungstechnischen Komponenten (z. B. die Elemente 140, 150-1 bis 150-3, sowie 160-1 bis 160-5 nach Fig. 1), wobei die eine oder mehreren Steuerinformation zumindest teilweise basierend auf einem oder mehreren Strom- und/oder Spannungsparametern, die beispielsweise von der Sensorik 220 erfasst wurden, bestimmt werden. Anschließend kann beispielsweise eine Ausgabe der einen oder mehreren Steuerinformationen erfolgen, z. B. mittels der Kommunikationsschnittstelle 240.

Vorrichtung 200 stellt ein Beispiel einer Vorrichtung gemäß dem ersten und/oder zweiten Aspekt der Erfindung dar.

Der Programmspeicher kann beispielsweise ein persistenter Speicher, wie beispielsweise ein Read-Only Memory (ROM)-Speicher sein. Der Programmspeicher kann beispielsweise fest mit dem Prozessor verbunden sein, kann aber alternativ auch lösbar mit dem Prozessor verbunden sein, beispielsweise als Speicherkarte, Diskette oder optisches Datenträgermedium (z. B. eine CD oder DVD). In dem Programmspeicher, oder in einem separaten Speicher, können auch weitere Informationen abgespeichert sein.

Der Arbeitsspeicher wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

Der Prozessor ist ferner operativ mit der Kommunikationsschnittstelle 240 verbunden, mit der beispielsweise ein Informationsaustausch mit anderen Elementen des Micro-Grids (z. B. Elemente 140, 150-1 bis 150-3, sowie 160-1 bis 160-5 nach Fig. 1) möglich ist.

Die Entkopplungseinheit 210, die Sensorik 220, die optionale Kommunikationsschnittstelle 240, der optionale Speicher 250 können von Block 200 umfasst sein, oder alternativ, wie in Fig. 2 dargestellt mehrere Entitäten ausbildet, die dann operativ (z. B. elektrisch) mit dem Block 200 verbunden sind.

Die in dieser Spezifikation beschriebenen beispielhaften Ausführungsformen / Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Vorrichtung zur technischen Entkopplung eines öffentlichen Stromnetzes, umfassend:
- zumindest eine Entkopplungseinheit über die ein Micro-Grid umfassend zumindest eine Energiequelle und zumindest einen Verbraucher mit einem öffentlichen Stromnetz verbunden ist; und
- zumindest einen Sensor zur Ermittlung von einem oder mehreren Strom- und/oder Spannungsparametern, insbesondere Spannung und/oder Frequenz, des Micro-Grids und/oder des öffentlichen Stromnetzes;
wobei erzeugte Energie des Micro-Grids in das öffentliche Stromnetz einspeisbar und/oder erzeugte Energie des öffentlichen Stromnetzes in das Micro-Grid einspeisbar ist, so dass die erzeugte elektrische Energie des öffentlichen Stromnetzes von dem zumindest einen Verbraucher des Micro-Grids nutzbar ist, wobei über den einen oder die mehreren Strom- und/oder Spannungsparameter, die seitens des zumindest einen Sensors ermittelbar sind, das Micro-Grid zumindest für eine vordefinierte Zeitspanne in einer von dem öffentlichen Stromnetz abweichenden Frequenz betreibbar ist.

2. Vorrichtung nach Anspruch 1, wobei über den einen oder die mehreren Strom- und/oder Spannungsparameter, die seitens des zumindest einen Sensors ermittelbar sind, eine Steuerung und/oder Regelung von der zumindest einen Energiequelle und/oder von dem zumindest einen Verbraucher des Micro-Grids durchführbar ist.

3. Vorrichtung nach Anspruch 2, wobei die Steuerung und/oder Regelung von der zumindest einen Energiequelle und/oder von dem zumindest einen Verbraucher des Micro-Grids basierend auf dem einen oder den mehreren Strom- und/oder Spannungsparametern durchführbar ist, die einem oder mehreren von dem öffentlichen Stromnetz vordefinierten Grenzwerten genügen.

4. Vorrichtung nach Anspruch 3, wobei basierend auf dem einen oder den mehreren Strom- und/oder Spannungsparametern und dem einen oder den mehreren von dem öffentlichen Stromnetz vordefinierten Grenzwerten, eine Wirkleistungs- und/oder Spannungsregelung des Micro-Grids durchführbar sind.

5. Vorrichtung nach einem der vorhergehenden Ansprüche, wobei das Micro-Grid eine gegenüber dem öffentlichen Stromnetz erhöhte Qualität der Versorgung von dem zumindest einen Verbraucher ermöglicht.

6. Vorrichtung nach einem der Ansprüche 3 bis 5, wobei der eine oder die mehreren Grenzwerte von einer zentralen Einheit des öffentlichen Stromnetzes an die Vorrichtung übermittelbar sind.

7. Vorrichtung nach einem der vorhergehenden Ansprüche, wobei die Vorrichtung eine Netzentkopplereinheit oder - vorrichtung ist.

8. Vorrichtung nach einem der vorhergehenden Ansprüche, wobei die Entkopplungseinheit ein Umrichter, insbesondere ein Wechselrichter und/oder ein Gleichrichter ist oder einen derartigen Umrichter umfasst.

9. Vorrichtung nach einem der vorhergehenden Ansprüche, wobei die zumindest eine Entkopplungseinheit ein Hochsetzsteller, ein Tiefsetzsteller, oder eine Kombination hiervon ist.

10. Vorrichtung nach einem der vorhergehenden Ansprüche, wobei die Vorrichtung zumindest zwei Gleichrichter umfasst, so dass an zumindest zwei Abgriffen, die von der Vorrichtung umfasst sind, jeweils unterschiedliche Gleichspannungen bereitstellbar sind.

11. Vorrichtung nach einem der vorhergehenden Ansprüche, ferner umfassend:
- zumindest einen Transformator mit einer definierten Kurzschlussspannung, wobei mittels der definierten Kurzschlussspannung ein Grad der mit dem zumindest einen Transformator realisierten Entkopplung zwischen dem Micro-Grid und dem öffentlichen Stromnetz eingestellt wird.

12. Vorrichtung nach einem der vorhergehenden Ansprüche, wobei mittels des zumindest einen Sensors ausschließlich ein oder mehrere Strom- und/oder Spannungsparameter des Micro-Grids ermittelbar sind, wobei basierend auf diesem einen oder diesen mehreren Strom- und/oder Spannungsparametern eine Steuerung und/oder Regelung von der zumindest einen Energiequelle und/oder von dem zumindest einen Verbraucher des Micro-Grids durchführbar ist.

13. Vorrichtung nach dem vorherigen Anspruch, wobei in einem Überlastfall, der von dem einen oder den mehreren Strom- und/oder Spannungsparametern, die von dem zumindest einen Sensor ermittelbar sind, repräsentiert ist, primär die Versorgung des Micro-Grids mit elektrischer Energie des öffentlichen Stromnetzes unterbrochen ist.

14. Vorrichtung nach einem der vorhergehenden Ansprüche, wobei die Vorrichtung ferner zumindest einen Pufferspeicher umfasst oder mit einem von dem Micro-Grid umfassten Pufferspeicher operativ verbunden ist, so dass eine Steuerung und/oder Regelung zur Einspeicherung oder Ausspeicherung von elektrischer Energie in den Pufferspeicher hinein oder aus dem Pufferspeicher heraus basierend auf dem einen oder den mehreren ermittelten Strom- und/oder Spannungsparametern durchführbar ist.

15. System, umfassend eine oder mehrere Vorrichtung nach einem der Ansprüche 1 bis 14.
